# EUROPÄISCHE PATENTANMELDUNG

(11) **EP 0 774 475 A2**
(43) Veröffentlichungstag der Anmeldung: **21.05.1997**
(21) Anmeldenummer: 96117910.8
(22) Anmeldetag: 08.11.1996
(51) Int. Cl.: C08G 18/08, C08G 18/80, C08G 18/28, C08G 18/10, C08G 18/30, C08G 18/84, C08G 18/83, C09D 175/04, C09J 175/04

(54) **Wässerige Dispersionen enthaltend ein Polyurethan mit oximblockierten Isocyanatgruppen und/oder Carbonylgruppen in Keto- oder Aldehydfunktion**

(30) Priorität: 17.11.1995 DE 19542853
(71) Anmelder: BASF AKTIENGESELLSCHAFT, 67056 Ludwigshafen (DE)
(72) Erfinder: Kokel, Nicolas, Dr., 67069 Ludwigshafen (DE); Fischer, Gerhard, 67246 Dirmstein (DE); Häberle, Karl, Dr., 67346 Speyer (DE); Larbig, Harald, Dr., 67063 Ludwigshafen (DE)

(57) **Zusammenfassung**

Wässerige Dispersionen, enthaltend ein Polyurethan, welches neben hydrophilen Gruppen, die die Wasserdispergierbarkeit des Polyurethans ermöglichen, funktionelle Gruppen, ausgewählt aus einer Menge, bestehend aus der Carbonylgruppe in Ketofunktion, der Carbonylgruppe in Aldehydfunktion und einer funktionellen Gruppe der allgemeinen Formel I 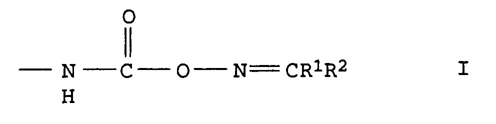 in der R¹ und R² C₁- bis C₆-Alkyl oder C₅- bis C₁₀-Cycloalkyl bedeutet, trägt,
mit der Maßgabe, daß
- für den Fall 1, daß das Polyurethan als funktionelle Gruppen nur Carbonylgruppen in Keto- und/oder Aldehydfunktion trägt (Polyurethan a), die wäßrige Dispersion ein Vernetzungsmittel (a') enthält, das funktionelle Gruppen der allgemeinen Formel I trägt und
- für den Fall 2, daß das Polyurethan als funktionelle Gruppen nur funktionelle Gruppen der allgemeinen Formel I trägt (Polyurethan b), die wässerige Dispersion ein Vernetzungsmittel (b') enthält, das Carbonylgruppen in Keto- oder Aldehydfunktion trägt.

## Beschreibung

Die vorliegende Erfindung betrifft wässerige Dispersionen, enthaltend ein Polyurethan, welches neben hydrophilen Gruppen, die die Wasserdispergierbarkeit des Polyurethans ermöglichen, funktionelle Gruppen, ausgewählt aus einer Menge, bestehend aus der Carbonylgruppe in Ketofunktion, der Carbonylgruppe in Aldehydfunktion und einer funktionellen Gruppe der allgemeinen Formel I 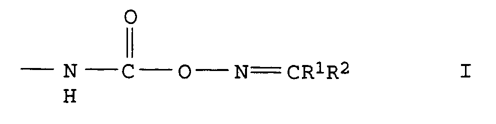 in der R¹ und R² C₁- bis C₆-Alkyl oder C₅- bis C₁₀-Cycloalkyl bedeutet mit der Maßgabe, daß
- für den Fall 1, daß das Polyurethan als funktionelle Gruppen nur Carbonylgruppen in Keto- und/oder Aldehydfunktion trägt (Polyurethan a), die wäßrige Dispersion ein Vernetzungsmittel (a') enthält, das funktionelle Gruppen der allgemeinen Formel I trägt und
- für den Fall 2, daß das Polyurethan als funktionelle Gruppen nur funktionelle Gruppen der allgemeinen Formel I trägt (Polyurethan b), die wässerige Dispersion ein Vernetzungsmittel (b') enthält, das Carbonylgruppen in Keto- oder Aldehydfunktion trägt.

Weiterhin betrifft die Erfindung die Verwendung der Dispersionen als Beschichtungsmittel oder Klebstoff.

Wässerige Polyurethandispersionen und deren Verwendung als Lack oder Klebstoff sind allgemein bekannt.

Die Oberflächenbeschichtungen aus den Polyurethandispersionen sollen ein hohes Anforderungsprofil aufweisen, also z.B. folgende Anforderungen erfüllen:
- Glatte Oberfläche und ein hoher Glanz
- Resistenz gegenüber Feuchtigkeit, Wasserdampf und Chemikalien wie verdünnte Laugen und Säuren sowie organischen Lösungsmitteln oder Tensiden
- Unempfindlichkeit gegenüber mechanischen Beanspruchungen wie Schlag, Stoß oder Reibung
- Keine Eigenfarbe oder Störsteilen wie Blasen oder Risse
- Im Fall von Holz als Substrat sollen die Lacke die sichtbare Strukturierung des Holzes stärker hervortreten lassen (Anfeuerung)

Damit die Anforderungen erfüllt werden können, ist es im allgemeinen erforderlich, die Polyurethandispersionen zusammen mit einem Vernetzungsmittel zu verarbeiten.

Die zweikomponentigen Beschichtungsmittel werden die Bindemittelkomponente und Vernetzungsmittelkomponente unmittelbar vor der Verarbeitung des Lacksystems miteinander vermischt, weil das Beschichtungsmittel nach der Vermischung seiner beiden Komponenten nur wenige Stunden lagerbar ist. Bei Polyurethandispersionen als Bindemittelkomponente sind beispielsweise Polyisocyanate als Vernetzungsmittelkomponente üblich.

Bei einkomponentigen, latent vernetzenden Beschichtungsmitteln ist der Zusatz einer Komponente, die die Vernetzung bewirkt, unmittelbar vor der Verarbeitung überflüssig, weil die Vernetzung der Komponente oder der Komponenten im wesentlichen erst nach der Verarbeitung, d.h. dem Auftragen des Beschichtungsmittels, stattfindet, jedoch vorher gehemmt ist. Diese einkomponentigen Systeme werden vom Verarbeiter den zweikomponentigen vorgezogen, weil sie lagerstabil und einfacher zu verarbeiten sind.

Einkomponentige Beschichtungsmittel auf wässeriger Basis sind beispielsweise aus der EP-A-332 326 bekannt. Bei den Beschichtungsmitteln handelt es sich u.a. um Polyurethane, die als die latente Vernetzung bewirkende komplementäre funktionelle Gruppen einerseits Carbonylgruppen in Keto- oder Aldehydfunktion und andererseits Hydrazingruppen tragen. Weiterhin kann es sich bei dem Beschichtungsmittel um eine Kombination aus einem Polyurethan, das eine der genannten funktionellen Gruppen trägt und einer Verbindung mit mehreren hierzu komplementären funktionellen Gruppen handeln.

Das anwendungstechnische Profil der hiermit hergestellten Oberflächenbeschichtungen vermag jedoch noch nicht vollständig zu befriedigen.

Aufgabe der vorliegenden Erfindung waren deshalb weitere latent vernetzende Einkomponenten-Beschichtungsmittel, die insbesondere die Nachteile des Standes der Technik nicht aufweisen.

Demgemäß wurden die eingangs definierten wässerigen Dispersionen gefunden.

Die erfindungsgemäßen wässerigen Dispersionen enthalten als Bindemittel
Fall 1
   eine Kombination aus einem Polyurethan (a), das Carbonylgruppen in Keto- und/oder Aldehydfunktion trägt jedoch im wesentlichen frei ist von funktionellen Gruppen der allgemeinen Formel I 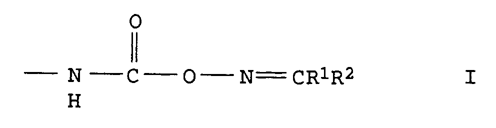 in der R¹ und R² C₁- bis C₆-Alkyl, bevorzugt Methyl- oder Ethyl oder C₅- bis C₁₀-Cycloalkyl bedeutet und einem Vernetzungsmittel (a'), das funktionelle Gruppen der allgemeinen Formel I trägt;
Fall 2
   eine Kombination aus einem Polyurethan (b), das Gruppen der allgemeinen Formel I trägt, jedoch im wesentlichen frei ist von Carbonylgruppen in Keto- oder Aldehydfunktion und Verbindungen mit mehr als einer Carbonylgruppe in Keto und/oder Aldehydfunktion (Vernetzungsmittel (b')); oder
Fall 3
   ein Polyurethan (c), das wenigstens eine Carbonylgruppe in Keto- oder Aldehydfunktion und wenigstens eine funktionelle Gruppe der allgemeinen Formel I trägt.

Bevorzugt sind die Polyurethane (a) aufgebaut aus:
a1) mehrwertigen Isocyanaten mit 4 bis 30 C-Atomen,
a2) Polyolen, von denen
   a2.1) 10 bis 100 mol-%, bezogen auf die Gesamtmenge der Diole (a2), ein Molekulargewicht von 500 bis 5000 aufweisen, und
   a2.2) 0 bis 90 mol-%, bezogen auf die Gesamtmenge der Diole (a2), ein Molekulargewicht von 60 bis 500 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
a4) von den Monomeren (a1), (a2) und (a3) verschiedene Monomere mit wenigstens einer Isocyanatgruppe oder wenigstens einer gegenüber Isocyanatgruppen reaktiven Gruppe, die darüber hinaus wenigstens eine Carbonylgruppe in Keto- oder Aldehydfunktion tragen und
a5) gegebenenfalls weiteren von den Monomeren (a1) bis (a4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt

Die Polyurethane (a) sind beispielsweise in der EP-A-332 326, DE-A-38 37 516, EP-A-442 652, JP-A 95/11193, EP-A-648 794, EP-A-552 469 und EP-A-584 818 beschrieben.

Bevorzugte Polyurethane (b) sind aufgebaut aus
b1) mehrwertigen Isocyanaten mit 4 bis 30 C-Atomen,
b2) Polyolen, von denen
   b2.1) 10 bis 100 mol-%, bezogen auf die Gesamtmenge der Diole (b2), ein Molekulargewicht von 500 bis 5000 aufweisen, und
   b2.2) 0 bis 90 mol-%, bezogen auf die Gesamtmenge der Diole (b), ein Molekulargewicht von 60 bis 500 g/mol aufweisen,
b3) von den Monomeren (b1) und (b2) verschiedenen Monomeren mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen,
b4) von den Monomeren (b1), (b2) und (b3) verschiedene Monomeren mit wenigstens einer Isocyanatgruppe oder wenigstens einer gegenüber Isocyanatgruppen reaktiven Gruppe, die darüber hinaus wenigstens eine funktionelle Gruppe der allgemeinen Formel I tragen
b5) gegebenenfalls weiteren von den Monomeren (b1) bis (b4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt

Die Polyurethane (c) sind bevorzugt aufgebaut aus
c1) mehrwertigen Isocyanaten mit 4 bis 30 C-Atomen,
c2) Polyolen, von denen
   c2.1) 10 bis 100 mol-%, bezogen auf die Gesamtmenge der Diole (c2), ein Molekulargewicht von 500 bis 5000 aufweisen, und
   c2.2) 0 bis 90 mol-%, bezogen auf die Gesamtmenge der Diole (c2), ein Molekulargewicht von 60 bis 500 g/mol aufweisen,
c3) von den Monomeren (c1) und (c2) verschiedene Monomere mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen, wodurch die Wasserdispergierbarkeit der Polyurethane bewirkt wird,
c4) von den Monomeren (c1), (c2) und (c3) verschiedene Monomere mit wenigstens einer Isocyanatgruppe oder wenigstens einer gegenüber Isocyanatgruppen reaktiven Gruppe, die darüber hinaus wenigstens eine Carbonylgruppe in Keto- oder Aldehydfunktion tragen
c5) von den Monomeren (c1), (c2), (c3) und (c4) verschiedenen Monomeren mit wenigstens einer Isocyanatgruppe oder wenigstens einer gegenüber Isocyanatgruppen reaktiven Gruppe, die darüber hinaus wenigstens eine funktionell Gruppe der allgemeinen Formel I tragen
c6) gegebenenfalls weiteren von den Monomeren (c1) bis (c5) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt

Als Monomere (a1), (b1) bzw. (c1) kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methan wie das trans/trans-, das cis/cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a1), (b1) bzw. (c1) kann man auch Isocyanate einsetzen, die neben den freien Isocyanatgruppen weitere verkappte Isocyanatgruppen, z.B. Uretdion- oder Carbodiimidgruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI).

Um Polyurethane mit einem gewissen Verzweigungs- oder Vernetzungsgrad herzustellen, können z.B. dreiwertige und vierwertige Isocyanate eingesetzt werden. Derartige Isocyanate werden z.B. erhalten, indem man zweiwertige Isocyanate miteinander umsetzt, indem man einen Teil ihrer Isocyanatgruppen zu Allophanat- oder Isocyanurat-Gruppen derivatisiert. Handelsübliche Verbindungen sind beispielsweise das Isocyanurat oder das Biuret des Hexamethylendiisocyanats.

Im Hinblick auf gute Flimbildung und Elastizität kommen als Polyole (a2), (b2) bzw. (c2) vornehmlich höhermolekulare Polyole (a2.1), (b2.1) bzw. (c2.1), bevorzugt Diole in Betracht, die ein Molekulargewicht von etwa 500 bis 5000, vorzugsweise von etwa 100 bis 3000 g/mol haben.

Bei den Diolen (a2.1), (b2.1) bzw. (c2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist. Beispiele sind ε-Caprolacton, β-Propiolacton, gamma-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (a2.1), (b2.1) bzw. (c2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-Ω-Dihydroxypolybutadien, α-Ω-Dihydroxypolymethacrylester oder α-Ω-Dihydroxypolyacrylester als Monomere (a2.1), (b2.1) bzw. (c2.1). Solche Verbindungen sind beispielsweise aus er EP-A-0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane läßt sich erhöhen, wenn als Diole (a1), (b1) bzw. (c1) neben den Diolen (a2.1), (b 2.1) bzw. (c2.1) noch niedermolekulare Diole (a2.1), (b 2.1) bzw. (C2.1) mit einem Molekulargewicht von etwa 62 bis 500, vorzugsweise von 62 bis 200 g/mol, eingesetzt werden.

Als Monomere (a2.1), (b 2.1) bzw. (C2.1) werden vor allem die Aufbaukomponenten der für die Herstellung von Polyesterpolyolen genannten kurzkettigen Alkandiole eingesetzt, wobei die unverzweigten Diole mit 2 bis 12C-Atomen und einer gradzahligen Anzahl von C-Atomen bevorzugt werden.

Bevorzugt beträgt der Anteil der Diole (a2.1), (b 2.1) bzw. (c2.1), bezogen auf die Gesamtmenge der der Diolen (a1), (b1) bzw. (c1) 10 bis 100 mol-% und der Anteil der Monomere (b2), bezogen auf die Gesamtmenge der der Diolen (a1), (b1) bzw. (c1) 0 bis 90 mol-%. eingesetzt. Besonders bevorzugt beträgt das Verhältnis der Diole (a2.1), (b 2.1) bzw. (c2.1) zu den Monomeren (a2.2), (b2.2) bzw. (c2.2) 0,2 : 1 bis 5:1, besonders bevorzugt 0,5 : 1 bis 2 : 1.

Um die Wasserdispergierbarkeit der Polyurethane zu erreichen, sind die Polyurethane neben den Komponenten (a1) und (a2) bzw. (b1) und (b2) bzw.(c1) und (c2) aus von diesen verschiedenen Monomeren (a3), (b3) bzw. (c3), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen Der Anteil der Komponenten mit (potentiell) hydrophilen Gruppen an der Gesamtmenge der Komponenten (a), (b), (c) und (d) wird im allgemeinen so bemessen, daß die Molmenge der (potentiell) hydrophilen Gruppen, bezogen auf die Gewichtsmenge aller Monomere (a) bis (d), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (a3), (b3) bzw. (c3) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (a3), (b3) bzw. (c3) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 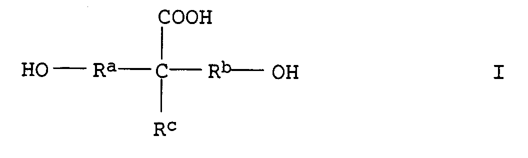 in welcher R^{a} und R^{b} für eine C₁- bis C₄-Alkandiyl-Einheit und R^{c} für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (a₃), (b₃) bzw. (c₃) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Als Monomere (a4) bzw. (c4) eignen sich beispielsweise Dihydroxyketone wie Dihydroxyaceton und das Addukt erhältlich durch Umsetzung von Diacetonacrylamid und einem Diamin oder einem Alkanolamin in einer Michael-Addition. Unter den geeigneten Alkoholaminen ist Diethanolamin besonders bevorzugt.

Bei den Monomeren (b4) bzw. (c5) handelt es sich bevorzugt um das Umsetzungsprodukt von einem mehrwertigen Isocyanat, beispielsweise solchen, die auch als Monomere (a1), (b1) bzw. (c1) in Betracht kommen und pro Mol mehrwertiges Isocyanat einem Oxim der allgemeinen Formel II 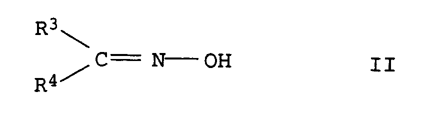 in der R³ und R⁴ jeweils
- R³: Wasserstoff, C₁- bis C₆-Alkyl oder C₅- bis C₆-Cycloalkyl
- R⁴: C₁- bis C₆-Alkyl oder C₅- bis C₆-Cycloalkyl
oder R⁴ und R⁴ gemeinsam C₄- bis C₁₀-Alkandiyl bedeuten.

Unter den Resten R³ und R⁴ ist Methyl oder Ethyl bevorzugt. Besonders bevorzugt sind Verbindungen, in denen sowohl R³ und R⁴ Methyl bedeutet oder R³ Methyl und R⁴ Ethyl bedeutet.

Weiterhin eignen sich als Monomere (b4) bzw. (c5) Verbindungen, die erhältlich sind durch
- Umsetzung eines zweiwertigen Isocyanates mit 4 bis 30 C-Atomen, dessen Isocyanatgruppen mit unterschiedlicher Geschwindigkeit gegenüber alkoholischen Hydroxylgruppen reagieren, mit pro Mol Isocyanat einem Oxim der allgemeinen Formel II, 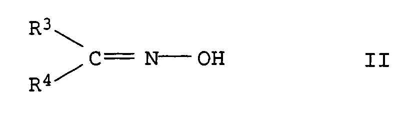 in der R³ und R⁴ jeweils
   - R³: Wasserstoff, C₁- bis C₆-Alkyl oder C₅- bis C₆-Cycloalkyl
   - R⁴: C₁- bis C₆-Alkyl oder C₅- bis C₆-Cycloalkyl
   oder R⁴ und R⁴ gemeinsam C₄- bis C₁₀-Alkandiyl bedeuten zu einem eine Oximgruppe tragenden Monoisocyanat und
- unmittelbar anschließende Umsetzung des eine Oximgruppe tragenden Monoisocyanates mit einem mehrwertigen Alkohol, der eine primäre oder sekundäre Aminogruppe trägt.

Für die Herstellung derartiger Monomere eignen sich besonders Isocyanate wie 2,4-Diisocyanatotoluol, 2,6-Diisocyanatotoluol und Isophorondiisocyanat.

Geeignete mehrwertige Alkohole mit einer Aminogruppe sind insbesondere Dis(C₂- bis C₆-Hydroxyalkyl)amine, bevorzugt Diethanolamin.

Die Monomere (a5), (b5) bzw. (c6), dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Die Polyurethane enthalten bevorzugt kein Polyamin oder 1 bis 10, besonders bevorzugt 4 bis 8 mol-%, bezogen auf die Gesamtmenge der Komponenten (a2) und (a5) bzw. (b2) und (b5) bzw. (c2) und (c6) eines Polyamins mit mindestens 2 gegenüber Isocyanaten reaktiven Aminogruppen als Monomere (a5), (b5) bzw. (c5).

Ferner können zum Kettenabbruch in untergeordneten Mengen, d.h. bevorzugt in Mengen von weniger als 10 mol-%, bezogen auf die Komponenten (a2) und (a5) bzw. (b2) und (b5) bzw. (c2) und (c6), Monoalkohole eingesetzt werden. Ihre Funktion ist im allgemeinen ähnlich wie die der Monoisocyanate, d.h. sie dienen hauptsächlich zur Kontrolle der Viskosität.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a1) bis (a5) bzw. (b1) bis (b5) bzw. (c1) bis (c6) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die Polyaddition der Komponenten (a) bis (d) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a1) bis (a5) bzw. (b1) bis (b5) bzw. (c1) bis (c6) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten (a1) bis (a5) bzw. (b1) bis (b5) bzw. (c1) bis (c6) werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Die Herstellung der Herstellung der wässerigen Dispersionen, die das Polyurethan (b) erhalten, kann weiterhin erfolgen durch
Ib) Umsetzung von Monomeren (b1) mit einem Teil oder der Gesamtmenge der Monomeren (b2), (b3) und gegebenenfalls (b5) zu einem Polyurethanpräpolymeren (b), das Isocyanatgruppen trägt
IIb) Umsetzung eines Teils der Isocyanatgruppen des Polyurethanpräpolymeren (b) mit einer Verbindung der allgemeinen Formel II zu einem oximblockierten Polyurethanpräpolymeren (b) und gegebenenfalls Kettenverlängerung des oximblockierten Polyurethanpräpolymeren (b) mit restlichen Monomeren (b2), (b3) und gegebenenfalls (b5) zu einem Polyurethan (b) oder zu einem Isocyanatgruppen-tragenden, kettenverlängerten, oximblockierten Polyurethanpräpolymeren (b)
IIIb) Dispergierung des Polyurethans (b) bzw. des isocyanatgruppentragenden, kettenverlängerten, oximblockierten Polyurethanpräpolymeren (b)
IVb) im Falle des isocyanatgruppentragenden, kettenverlängerten, oximblockierten Polyurethanpräpolymeren (b) erneute Kettenverlängerung mit einem Monomeren (b5).

Wässerige Dispersionen, die das Polyurethan (c) enthalten, können ebenfalls erhalten werden durch
Ic) Umsetzung von Monomeren (c1) mit einem Teil oder der Gesamtmenge der Monomeren (c2), (c3), (c4) und gegebenenfalls (c6) zu einem Polyurethanpräpolymeren (c), das Isocyanatgruppen trägt,
IIc) Umsetzung eines Teils der Isocyanatgruppen des Polyurethanpräpolymeren (c) mit einer Verbindung der allgemeinen Formel II zu einem oximblockierten Polyurethanpräpolymeren (c) und gegebenenfalls Kettenverlängerung des oximblockierten Polyurethanpräpolymeren (c) mit restlichen Monomeren (c2), (c3), (c4) und (c6) zu einem Polyurethan (c) oder zu einem Isocyanatgruppen-tragenden, kettenverlängerten, oximblockierten Polyurethanpräpolymeren (c)
IIIc) Dispergierung des Polyurethans (c) bzw. des isocyanatgruppentragenden, kettenverlängerten, oximblockierten Polyurethanpräpolymeren (c)
IVc) im Falle des isocyanatgruppentragenden, kettenverlängerten, oximblockierten Polyurethanpräpolymeren (c) erneute Kettenverlängerung mit einem Monomeren (c6).

Die wässerigen Dispersionen, die ein Polyurethan (a) enthalten, enthalten als Vernetzungsmittel (a') beispielsweise ein Polyurethan (b). Sie sind auf einfache Weise erhältlich, indem man auf die beschriebene Art und Weise je eine wässerige Dispersion, die das Polyurethan (a) enthält und eine andere, die das Polyurethan (b) enthält herstellt und diese beiden Dispersionen miteinander vermischt, z.B. indem man sie miteinander verrührt.

Weiterhin kommen als Vernetzungsmittel (a') die aus EP-A-522 306, DE-A-42 37 030, DE-A-33 45 448, WO 93/01245 und der US-A-5 358 997 bekannten Verbindungen, die oximblockierte Isocyanatgruppen tragen, in Betracht.

Bevorzugt sind die Isocyanatgruppen dieser Verbindungen mit den Oximen der allgemeinen Formel II in Betracht.

Geeignete Isocyanate sind beispielsweise jene, die auch als Monomere (a1), (b1) bzw. (c1) in Betracht kommen.

Vernetzungsmittel (b'), welche die erfindungsgemäßen wässerigen Dispersionen in Kombination mit einem Polyurethan (b) enthalten, sind beispielsweise Polyurethane (a).

Weiterhin kommen als Vernetzungsmittel (a') sonstige mehrfunktionelle Verbindungen mit Carbonylgruppen in Aldehyd- oder Ketofunktion in Betracht, z.B. aliphatische Dialdehyde mit 2 bis 10 Kohlenstoffatomen, wobei unverzweigte, Bisaldehyde mit endständigen Aldehydgruppen besonders bevorzugt sind.

Als Vernetzungsmittel (a') kommen weiterhin Oligomere oder Polymere bevorzugt in Form einer Dispersion, erhältlich durch radikalische Polymerisation oder Copolymerisation, z.B. durch Emulsions- oder Suspensionspolymerisation, von Monomeren wie Methylvinylketon, (Meth)Acrolein, Crotonaldehyd, Diaceton(meth)acrylamid, Diaceton(meth)acrylat, Methylvinylketon, Formylstyrol, gemischte Ester von aliphatischen Diolen mit (Meth)Acrylsäure und Acetessigsäure, Hydroxymethylfuryl(meth)acrylat, in Betracht.

Als Copolymere kommen beispielsweise übliche radikalisch polymerisierbare Monomere, z.B. C₁ bis C₆-Alkylester der (Meth)acrylsäure, Vinylester von bis zu 20 C-Atome enthaltende Carbonsäuren wie Vinyllaurat, -stearat, Vinylacetat und Vinylpropionat, Vinylaromaten mit bis zu 20 C-Atomen wie Styrol und Vinyltoluol, ethylenisch ungesättigte Nitrile wie Acrylnitril und Methacrylnitril, ethylenisch ungesättigte Amide wie Acrylamid und Methacrylamid, Vinylhalogenide wie Vinylchlorid und Vinylidenchlorid und aliphatische Kohlenwasserstoffe mit 2 bis 8 C-Atomen und 1 oder 2 C=C-Doppelbindungen wie Butadien und Ethylen. Bei den wässerig in Dispersionen, die das Polyurethan cc) enthalten, erübrigt sich im allgemeinen die Zugabe eines Vernetzungsmittels.

Die Polyurethane (a), (b) bzw. (c) enthalten bevorzugt 50 bis 1500, besonders bevorzugt 150 bis 800 mmol funktionelle Gruppen (Carbonylgruppen in Keto- oder Aldehydfunktion bzw. oximblockierte Isocyanatgruppen) pro 100 g Polyurethan.

Das Vernetzungsmittel (a') bzw. (b') ist bevorzugt in den erfindungsgemäßen wässerigen Dispersionen, die das Polyurethan (a) oder (b) enthalten, in solchen Mengen enthalten, daß auf 1 mol funktionelle Gruppen des Polyurethans (a) oder (b) 0,1 bis 10, besonders bevorzugt 0,5 bis 2 mol hierzu komplementäre funktionelle Gruppen (Carbonylgruppen in Keto- oder Aldehydfunktion bzw. oximbockierte Isocyanatgruppen) kommen.

Die erfindungsgemäßen Zusammensetzungen können auch weitere wasseremulgierbare oder -dispergierbare Harze, wie Polymer-, Polyurethane, Polyester-, Epoxid- oder Alkydharze sowie handelsübliche Hilfs- und Zusatzstoffe wie Treibmittel, Entschäumer, Emulgatoren, Verdickungsmittel, Verlaufsmittel und Thixotropiermittel, Farbmittel wie Farbstoffe und Pigmente enthalten.

Die erfindungsgemäßen wässerigen Dispersionen dienen beispielsweise als Beschichtungsmittel, z.B. als Lack, zur Beschichtung unterschiedlicher Substrate, z.B. Metall, Leder, Kunststoffe, Papier und Holz.

Die Beschichtungsmittel werden hierzu im allgemeinen nach den in der Lackindustrie üblichen Verfahren auf das zu beschichtende Werkstück aufgetragen, also beispielsweise durch Walzen, Spritzen, Streichen, Gießen, Tauchen.

Die anschließende Trocknung bzw. Aushärtung des Lacks kann sowohl durch Kalthärtung (d.h. durch Trocknung bei Temperaturen von 0 bis 80°C, bevorzugt bei Raumtemperatur) oder nach dem sog. Einbrennverfahren (d.h. durch Trocknung üblicherweise bei Temperaturen von 80 bis 280°C) erfolgen.

Weiterhin sind die erfindungsgemäßen wässerigen Dispersionen als Klebstoff zum Verkleben der vorgenannten Substrate sowie als Imprägniermittel zur Verfestigung von Materialien wie Textilien, z.B. Vliesmaterialien, oder Papier.

## Patentansprüche

1. Wässerige Dispersionen, enthaltend ein Polyurethan, welches neben hydrophilen Gruppen, die die Wasserdispergierbarkeit des Polyurethans ermöglichen, funktionelle Gruppen, ausgewählt aus einer Menge, bestehend aus der Carbonylgruppe in Ketofunktion, der Carbonylgruppe in Aldehydfunktion und einer funktionellen Gruppe der allgemeinen Formel I 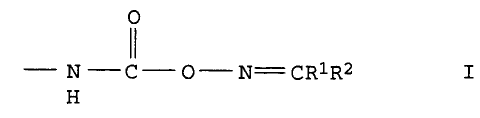 in der R¹ und R² C₁- bis C₆-Alkyl oder C₅- bis C₁₀-Cycloalkyl bedeutet, trägt, mit der Maßgabe, daß
- für den Fall 1, daß das Polyurethan als funktionelle Gruppen nur Carbonylgruppen in Keto- und/oder Aldehydfunktion trägt (Polyurethan a), die wäßrige Dispersion ein Vernetzungsmittel (a') enthält, das funktionelle Gruppen der allgemeinen Formel I trägt und
- für den Fall 2, daß das Polyurethan als funktionelle Gruppen nur funktionelle Gruppen der allgemeinen Formel I trägt (Polyurethan b), die wässerige Dispersion ein Vernetzungsmittel (b') enthält, das Carbonylgruppen in Keto- oder Aldehydfunktion trägt.

2. Wässerige Dispersionen nach Anspruch 1, wobei das Polyurethan wenigstens eine funktionelle Gruppe der allgemeinen Formel I und wenigstens eine Carbonylgruppe in Keto- oder Aldehydfunktion trägt (Polyurethan c).

3. Wässerige Dispersionen nach Anspruch 1, enthaltend als Polyurethan (a) ein Polyurethan aufgebaut aus
a1) mehrwertigen Isocyanaten mit 4 bis 30 C-Atomen,
a2) Polyolen, von denen
a2.1) 10 bis 100 mol-%, bezogen auf die Gesamtmenge der Diole (a2), ein Molekulargewicht von 500 bis 5000 aufweisen, und
a2.2) 0 bis 90 mol-%, bezogen auf die Gesamtmenge der Diole (a2), ein Molekulargewicht von 60 bis 500 g/mol aufweisen,
a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,
a4) von den Monomeren (a1), (a2) und (a3) verschiedene Monomere mit wenigstens einer Isocyanatgruppe oder wenigstens einer gegenüber Isocyanatgruppen reaktiven Gruppe, die darüber hinaus wenigstens eine Carbonylgruppe in Keto- oder Aldehydfunktion tragen und
a5) gegebenenfalls weiteren von den Monomeren (a1) bis (a4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt.

4. Wässerige Dispersionen nach Anspruch 1 oder 3, enthaltend als Polyurethan (b) ein Polyurethan, aufgebaut aus
b1) mehrwertigen Isocyanaten mit 4 bis 30 C-Atomen,
b2) Polyolen, von denen
b2.1) 10 bis 100 mol-%, bezogen auf die Gesamtmenge der Diole (b2), ein Molekulargewicht von 500 bis 5000 aufweisen, und
b2.2) 0 bis 90 mol-%, bezogen auf die Gesamtmenge der Diole (b), ein Molekulargewicht von 60 bis 500 g/mol aufweisen,
b3) von den Monomeren (b1) und (b2) verschiedenen Monomeren mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen,
b4) von den Monomeren (b1), (b2) und (b3) verschiedene Monomeren mit wenigstens einer Isocyanatgruppe oder wenigstens einer gegenüber Isocyanatgruppen reaktiven Gruppe, die darüber hinaus wenigstens eine funktionelle Gruppe der allgemeinen Formel I tragen
b5) gegebenenfalls weiteren von den Monomeren (b1) bis (b4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt.

5. Wässerige Dispersionen nach Anspruch 1 oder 2, enthaltend als Polyurethan (c) ein Polyurethan aufgebaut aus
c1) mehrwertigen Isocyanaten mit 4 bis 30 C-Atomen,
c2) Polyolen, von denen
c2.1) 10 bis 100 mol-%, bezogen auf die Gesamtmenge der Diole (c2), ein Molekulargewicht von 500 bis 5000 aufweisen, und
c2.2) 0 bis 90 mol-%, bezogen auf die Gesamtmenge der Diole (c2), ein Molekulargewicht von 60 bis 500 g/mol aufweisen,
c3) von den Monomeren (c1) und (c2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
c4) von den Monomeren (c1), (c2) und (c3) verschiedene Monomere mit wenigstens einer Isocyanatgruppe oder wenigstens einer gegenüber Isocyanatgruppen reaktiven Gruppe, die darüber hinaus wenigstens eine Carbonylgruppe in Keto- oder Aldehydfunktion tragen und
c5) von den Monomeren (c1), (c2), (c3) und (c4) verschiedenen Monomeren mit wenigstens einer Isocyanatgruppe oder wenigstens einer gegenüber Isocyanatgruppen reaktiven Gruppe, die darüber hinaus wenigstens eine funktionell Gruppe der allgemeinen Formel I tragen
c6) gegebenenfalls weiteren von den Monomeren (c1) bis (c5) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt.

6. Wässerige Dispersionen nach den Ansprüchen 1 bis 5, wobei es sich bei den Monomeren (b4) bzw. (c5) um eine Verbindung, erhältlich durch
- Umsetzung eines zweiwertigen Isocyanates mit 4 bis 30 C-Atomen, dessen Isocyanatgruppen mit unterschiedlicher Geschwindigkeit gegenüber alkoholischen Hydroxylgruppen reagieren, mit pro Mol Isocyanat einem Oxim der allgemeinen Formel II, 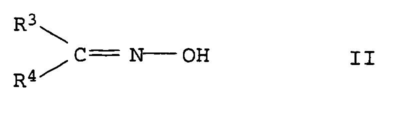 in der R³ und R⁴ jeweils
R³ Wasserstoff, C₁- bis C₆-Alkyl oder C₅- bis C₆-Cycloalkyl
R⁴ C₁- bis C₆-Alkyl oder C₅- bis C₆-Cycloalkyl
oder R³ und R⁴ gemeinsam C₄- bis C₁₀-Alkandiyl bedeuten zu einem eine Oximgruppe tragenden Monoisocyanat und
- unmittelbar anschließende Umsetzung des eine Oximgruppe tragenden Monoisocyanates mit einem mehrwertigen Alkohol, der eine primäre oder sekundäre Aminogruppe trägt.

7. Wässerige Dispersionen nach Anspruch 6, wobei es sich bei dem zweiwertigen Isocyanat um Diisocyanatotoluol oder Isophorondiisocyanat handelt.

8. Wässerige Dispersionen nach Anspruch 6 oder 7, wobei es sich bei dem mehrwertigen Alkohol um Di(C₂- bis C₆-Alkanol)-amin handelt.

9. Wässerige Dispersionen nach den Ansprüchen 1 bis 4 und 6 bis 8 enthaltend ein Polyurethan (b) erhältlich durch
Ib) Umsetzung von Monomoren (b1) mit einem Teil oder der Gesamtmenge der Monomeren (b2), (b3) und gegebenenfalls (b5) zu einem Polyurethanpräpolymeren (b), das Isocyanatgruppen trägt
IIb) Umsetzung eines Teils der Isocyanatgruppen des Polyurethanpräpolymeren (b) mit einer Verbindung der allgemeinen Formel II zu einem oximblockierten Polyurethanpräpolymeren (b) und gegebenenfalls Kettenverlängerung des oximblockierten Polyurethanpräpolymeren (b) mit restlichen Monomeren (b2), (b3) und (b5) zu einem Polyurethan (b) oder zu einem isocyanatgruppentragenden, kettenverlängerten, oximblockierten Polyurethanpräpolymeren (b) oder Umsetzung der Gesamtmenge der Isocyanatgruppen des Polyurethanpräpolymeren (b) mit einer Verbindung der allgemeinen Formel II zu einem Polyurethan (b)
IIIb) Dispergierung des Polyurethans (b) bzw. des isocyanatgruppentragenden, kettenverlängerten, oximblockierten Polyurethanpräpolymeren (b)
IVb) im Falle des isocyanatgruppentragenden, kettenverlängerten, oximblockierten Polyurethanpräpolymeren (b) erneute Kettenverlängerung mit einem Monomeren (b5).

10. Wässerige Dispersionen nach den Ansprüchen 1, 3, 4 und 6 bis 9, enthaltend ein Polyurethan (a) und als Vernetzungsmittel (a') ein Polyurethan (b).

11. Wässerige Dispersionen nach den Ansprüchen 1, 4 und 6 bis 9, enthaltend ein Polyurethan (b) und als Vernetzungsmittel ein Copolymer hergestellt durch radikalische Polymerisation von Monomeren, die neben einer radikalisch polymerisierbaren C=C-Doppelbindung eine Carbonylgruppe in Keto- oder Aldehydfunktion tragen sowie gegebenenfalls weiteren radikalisch polymerisierbaren Monomeren mit einer C=C-Doppelbindung.

12. Wässerige Dispersion nach den Ansprüchen 1, 2 sowie 5 bis 8, enthaltend ein Polyurethan (c) erhältlich durch
Ic) Umsetzung von Monomeren (c1) mit einem Teil oder der Gesamtmenge der Monomeren (c2), (c3), (c4) und gegebenenfalls (c6) zu einem Polyurethanpräpolymeren (c), das Isocyanatgruppen trägt,
IIc) Umsetzung eines Teils der Isocyanatgruppen des Präpolymeren (c) mit einer Verbindung der allgemeinen Formel II zu einem oximblockierten Polyurethanpräpolymeren (c) und gegebenenfalls Kettenverlängerung des oximblockierten Polyurethanpräpolymeren (c) mit restlichen Monomeren (c2), (c3), (c4) und (c6) zu einem Polyurethan (c) oder zu einem isocyanatgruppentragenden, kettenverlängerten, oximblockierten Polyurethanpräpolymeren (c),
IIIc) Dispergierung des Polyurethans (c) bzw. des isocyanatgruppentragenden, kettenverlängerten, oximblockierten Polyurethanpräpolymeren (c)
IVc) im Falle des isocyanatgruppentragenden, kettenverlängerten, oximblockierten Polyurethanpräpolymeren (2) erneute Kettenverlängerung mit einem Monomeren (c6).

13. Wässerige Dispersionen nach den Ansprüchen 1 bis 3, 5 bis 8, 10 und 12, wobei das molare Verhältnis der Carbonylgruppen in Keto- oder Aldehydfunktion, die das Polyurethan (a) bzw. das Polyurethan (c) trägt, zu den funktionellen Gruppen der allgemeinen Formel I, die das Vernetzungsmittel (a') bzw. das Polyurethan (c) trägt, 0,1 : 1 bis 10 : 1 beträgt.

14. Wässerige Dispersionen nach den Ansprüchen 1, 4, 6 bis 9 und 11, wobei das molare Verhältnis der funktionellen Gruppen der allgemeinen Formel I, die das Polyurethan (b) trägt, zu dem Vernetzungsmittel (b') 0,1 : 1 bis 10 : 1 beträgt.

15. Verwendung der wässerigen Dispersionen nach den Ansprüchen 1 bis 14 für die Beschichtung von Holz, Papier, Metall, Leder, Kunststoffen sowie als Klebstoff.

16. Gegenstände mit einer Oberfläche aus Holz, Papier, Metall, Leder oder Kunststoff, die mit den wässerigen Dispersionen nach den Ansprüchen 1 bis 14 beschichtet sind.
